# EUROPEAN PATENT SPECIFICATION

(11) **EP 2 027 934 B1**
(45) Date of publication and mention of the grant of the patent: **04.10.2017**
(21) Application number: 08161217.8
(22) Date of filing: 25.07.2008
(51) Int. Cl.: B05B 17/06, B22F 9/08, C03B 19/10, C03B 37/06

(54) **Method for spray-forming melts of glass and glass-ceramic compositions**
Verfahren zum Zerstäuben von Glasschmelzen und Glaskeramikzusammensetzungen
Procédé de formage par projection de mélanges de verre et compositions verre-céramique

(30) Priority: 25.07.2007 US 878625
(43) Date of publication of application: 25.02.2009
(73) Proprietor: Schott Corporation, Elmsford, New York 10523 (US)
(72) Inventor: Weinhold, Carsten, Scranton, PA 18510 (US); Yuhas, David, Clarks-Summit, PA 18642 (US)
(74) Representative: Schrooten, Rolf

(56) References cited:
- EP-A- 0 444 767
- DE-A1- 4 141 626
- DE-A1- 10 340 606
- US-A- 4 060 355
- US-A- 4 472 329
- US-A- 4 485 834
- US-A1- 2005 150 971
- US-B1- 6 254 661

## Description

The invention relates to a method and apparatus for preparing particulates from melts of glass or glass-ceramic compositions by spray-forming. In particular, the invention relates to a method and apparatus for preparing glass compositions of small particles, with narrow size distribution, in bulk quantities (> 1 kg/min).

### Background of the Invention

There are numerous known methods for spraying molten material (mostly metals and polymers) to obtain particulate powders, such as spherical powders, having a defined size.

US 2,997.245 discloses an apparatus for pulverizing and/or decomposing solid as well as molten materials. One embodiment of the apparatus comprises a crucible, which contains molten material, and is positioned above a system of annular resonator chambers resembling a Hartmann-Sprenger chamber. Compressed gas streams through an annulus against an edge belonging to a first annular resonator chamber, and then into a second annular resonator chamber. The arrangement of both resonator chambers generates supersonic, non-stationary shockwaves having ultrasonic frequency, which are then directed towards and focused on a small area of the material to be pulverized.

US 4,485,834 discloses an apparatus for atomizing a molten material such as complex metal alloys, i.e., materials which are solid at room temperature. The apparatus utilizes an atomization die assembly which comprises a set of opposed linearly configured die elements which define a longitudinally configured die space or gap through which a sheet of molten material is discharged. The die elements have oppositely disposed orifice-bearing surfaces which form a nozzle assembly. An ultrasonic atomizing gas exits the linear array of orifices and impinges against a predetermined focal region of a sheet of molten material passing through the die space or gap. Each of the orifices have having resonating cavities associated therewith for generating ultrasonic high frequency shock waves for disintegrating the sheet of molten material at the focal region into fine particles. The ultrasonic shock waves generated exhibit frequencies of about 20kHz to 30kHz (primary), and at about 100kHz (secondary).

### Summary of the Invention

While the known processes and systems provide for formation of solid particles through the use of ultrasonic shockwaves, the resultant particles can vary widely in size distribution. The formation of glass and glass ceramic particles having a controlled particle size distribution is important for processes which utilize such materials as precursors, such as in the preparation of opto-ceramic elements, filter media, and catalysts supports. Thus, the present invention is directed to a method and an apparatus for providing solids particles, especially glass and glass ceramic particles, by subjecting a stream of molten material to ultrasonic shock waves, whereby the size distribution of the resultant particles can be easily controlled.

Furthermore, previously disclosed processes and systems often require complex arrangements to heat the melt delivery tube during operation, such as by injecting pressurized preheated gas, in order to prevent freezing of the melt discharge outlet. Additionally, many known processes require the pressurization of the melting crucible in order to force the melt into an atomizer. Thus, the present invention is directed to a method and an apparatus for providing solids particles which does not require the pressurization of the melting crucible, and does not required the supply of preheated gas at pressures in excess of 2 bar.

According to a process aspect of the invention, there is provided a process for the production of particulate compositions, especially particulate glass compositions, the process comprising:
providing a super-sonic nozzle element having an inlet, a gas amplifier section, a shockwave generator section, a delivery tube for introducing molten material, and an outlet for discharging particles formed from said molten material,
said delivery tube being positioned within said inlet of said super-sonic nozzle element, a peripheral opening (preferably an annular opening) being formed between said inlet of said super-sonic nozzle and said delivery tube, said super-sonic nozzle further comprising at least one first opening in the gas amplifier section for introducing a cold gas (e.g., air at a temperature of 0°C to 100°C and a pressure of 1-200 bar) into said nozzle element, said first opening being positioned below said peripheral opening to create a low-pressure zone in said nozzle element, and said super-sonic nozzle further comprising at least one second inlet in the shockwave generator section for introducing a cold gas (e.g., air at a temperature of 0°C to 100°C and a pressure of 1-200 bar) into said nozzle element at a point adjacent said outlet of said super-sonic nozzle,
introducing a cold gas (e.g., air at a temperature of 0°C to 100°C and a pressure of 1-200 bar) into said first opening of said nozzle element thereby pulling a preheated gas (including air, CO, CO₂, Ar, He, N₂, or mixtures thereof) at a temperature of 750°C to 2000°C) into said nozzle element through said peripheral opening,
introducing a stream of molten material through said delivery tube whereby gas flowing through the nozzle severs liquid material from the outlet of the delivery tube forming droplets of molten material,
forming a standing cone-shaped shockwave within said super-sonic nozzle adjacent the outlet of said super-sonic nozzle,
introducing a cold gas (e.g., air at a temperature of 0°C to 100°C and a pressure of 1-200 bar, preferably 5-200 bar) into said second opening of said nozzle element thereby creating non-stationary shock waves at ultrasonic frequencies which are transferred through the cone-shaped shockwave to the droplets of molten material thereby breaking up larger droplets, and
forming particles by quenching the resultant droplets discharged from the outlet of said super-sonic nozzle.

According to an apparatus aspect of the invention, there is provided an apparatus for the production of particulate compositions, especially particulate glass compositions, the apparatus comprising:
a super-sonic nozzle element having an inlet, a gas amplifier section, a shockwave generator section, a delivery tube for introducing molten material, and an outlet for discharging particles formed from molten material,
said delivery tube being positioned within said inlet of said super-sonic nozzle element, a peripheral opening (preferably an annular opening) being formed between said inlet of said super-sonic nozzle and said delivery tube, said super-sonic nozzle further comprising at least one first opening in the gas amplifier section for introducing a cold gas into said nozzle element, said first opening being positioned below said peripheral opening to create a low-pressure zone in said nozzle element, and said super-sonic nozzle further comprising at least one second opening in the shockwave generator section for introducing a cold gas into said nozzle element at a point adjacent said outlet of said super-sonic nozzle, and
said nozzle having a geometry whereby introduction of a gas (e.g., air at 0°C to 100°C and a pressure of 1-200 bar, preferably 5-200 bar) into said second opening of said nozzle element will create shock waves.

The invention uses modified sonic/supersonic nozzle geometries in a novel arrangement. These modifications of nozzle geometry can be achieved using by using methods known to those skilled in the art of jet engine design and fuel injection.

### Brief Description of the Drawings

Various other features and attendant advantages of the present invention will be more fully appreciated as the same becomes better understood when considered in conjunction with the accompanying drawings, in which like reference characters designate the same or similar parts throughout the several views, and wherein:
- Figure 1 shows a cross section of the overall melt-spray apparatus according to the invention comprising the super-sonic nozzle and molten material delivery tube;
- Figure 2 illustrates the introduction of cold gas (e.g., air) into the air or gas amplifier section of the super-sonic nozzle;
- Figure 3 illustrates the introduction of heated gas through the peripheral opening formed between the molten material delivery tube and the inlet of the super-sonic nozzle;
- Figure 4 illustrates the formation of droplets form the end of the molten material delivery tube and the formation of a standing cone-shaped shock wave in the shock wave generator section of the super-sonic nozzle;
- Figure 5 illustrates the geometry of the super-sonic nozzle being such that angle of the shock wave cone is equal or substantially equal to the angle of the gas (e.g., air) outlet in the shock wave generator section of the super-sonic nozzle;

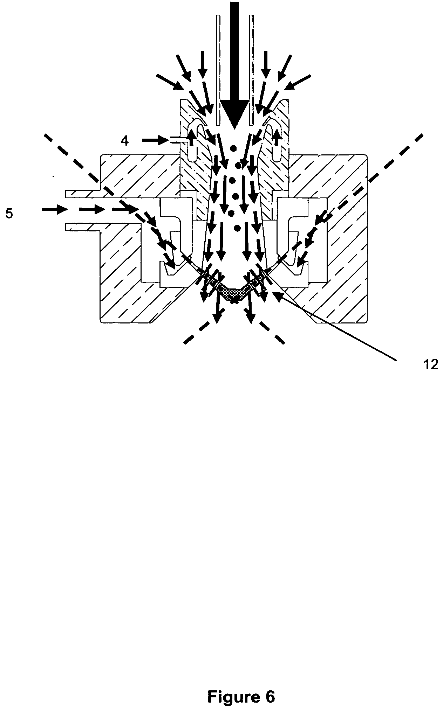

- Figure 6 illustrates the generation of shock waves and the transfer thereof through the cone-shaped shock wave into the particle stream;
- Figure 7 is an optical microscope image of particulates produced according to Example 1; and
- Figure 8 is an optical microscope image of particulates produced according to Example 2; and
- Figure 9 shows an arrangement for the shock wave generator formed from an adjustable ringset.

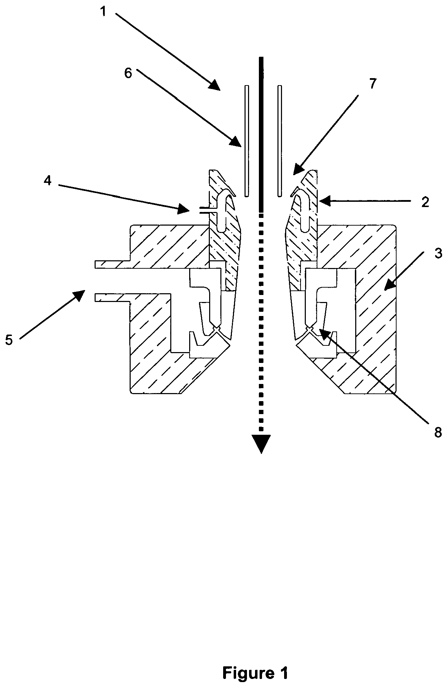

As shown in Figure 1, the super-sonic nozzle apparatus 1 comprises a gas amplifier section 2 and a shock wave generator 3. Each of these sections has a gas inlet (inlet 4 for the gas amplifier section and inlet 5 for the shock wave generator) for introducing a cold gas such as cold air, into the interior of the nozzle 1. The gas is generally introduced through each of these inlets at a temperature of 0°C to 100°C, a pressure of, for example, 1 bar to 200 bar, preferably higher than 5 bar. Gas pressure and flow-rate depend on the material to be sprayed; typically, the pressure of the gas supplied to the shockwave generator will be higher than the pressure of the gas supplied to the gas amplifier section. Dry air is the preferred gas for inlets 4 and 5, although other suitable gases such as He, N₂, Ar, or mixtures thereof can be used. Depending on the application for the particles to be produced the compressed gas supplied can be either inert or reactive.

Additionally, the system is provided with a tube 6 (referred to as the refractory metal delivery tube) for introducing the molten material into the nozzle 1. The tube 6 is connected to a source of molten material, preferably molten glass. The tube 6 is positioned so that the outlet of the tube, from which the molten material is dispensed, is within the nozzle 1 and a peripheral opening 7 (preferably, an annular opening) is formed between the inlet of the nozzle 1 and the delivery tube 6. This peripheral opening provides an inlet for the introduction of a heated gas such air, CO, CO₂, He, N₂, Argon, etc., or mixtures thereof. The preheated gas is generally at a pressure of 1 to 2 bar, which is always lower than the pressure of the gas supplied through inlet 4, and a temperature of generally 750°C to 2000°C. In general, the temperature and the pressure of the preheated gas depend on the material to be sprayed.

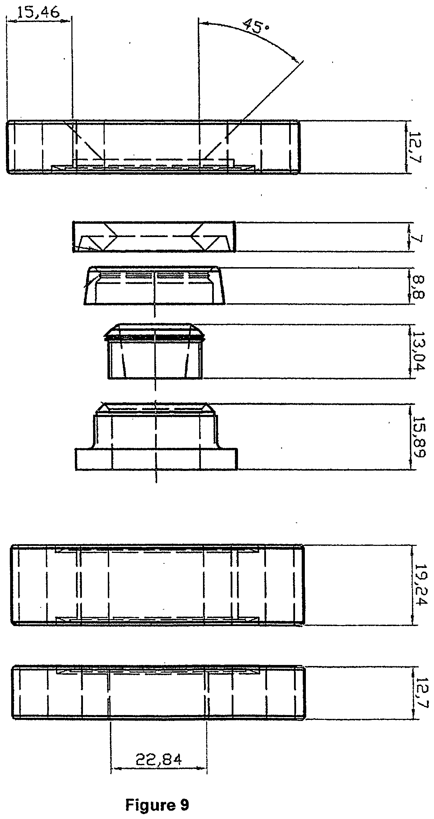

The shock wave generator 3 is preferably made from an adjustable ringset 8 comprising four rings which define the shape of the resonating cavities, each of which resembles a modified Hartmann-Sprenger chamber (similar in shape to the modified Hartmann-Sprenger chamber of US 4,485,834) (see Figure 9). To alter the size and/or shape of the annular gap of the shock wave generator 3 (discussed further below), the individual rings of the adjustable ringset 8 can be replaced, or moved relative to the other rings along a thread. The adjustment allows the fine-tuning of the arrangement for a given operating pressure to achieve the highest-possible shockwave amplitudes.

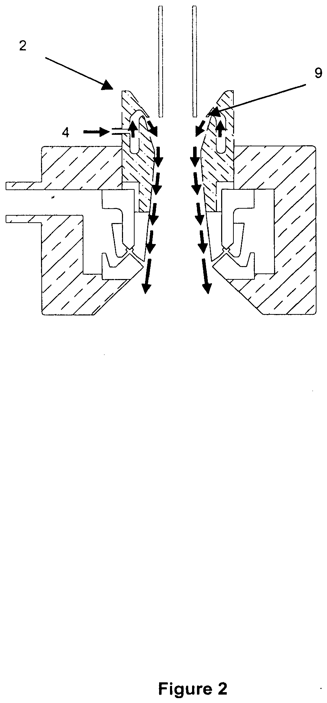

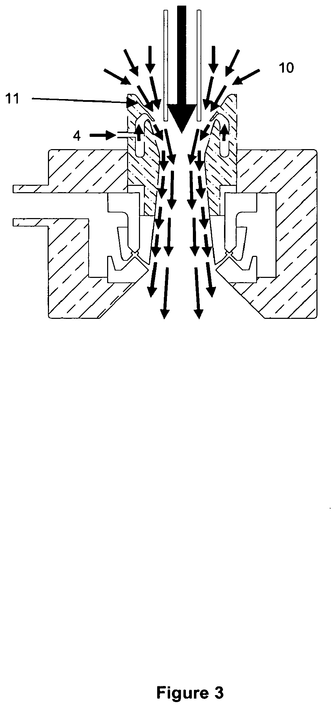

As illustrated in Figure 2, a cold compressed air stream can be introduced through inlet 4 of the gas amplifier section and exits an annular gap 9 in the wall of the nozzle at a point slightly below the outlet of the delivery tube 6. This air stream generates a local low-pressure zone due to the Coanda effect, thereby pulling preheated gas (air, He, N₂, others) through the opening between the delivery tube and the surrounding gas amplifier section of the nozzle 1 (see Figure 3). The resultant stream of hot gas severs liquid material from the outlet of the delivery tube 6.

The resultant mixture of cold/hot gas and particles enters the diffuser part of the super-sonic nozzle 1. As described in more detail below, a standing shockwave is formed at the outlet of the diffuser. Ultrasonic shockwaves, generated by the introduction of compressed gas (e.g., air) through inlet 5 into a modified Hartmann-Sprenger chamber, are transmitted into the gas/particle stream, to further breakup larger particles, thus narrowing the particle size distribution.

In operation, referring to the arrows in Figure 2, cold compressed air (1bar - 200bar) is applied to the Gas Amplifier through inlet 4, and exits through an annulus into the interior of the nozzle 1. The cold air clings to the surface of the super-sonic nozzle, expands and accelerates. This air stream generates a local low-pressure zone around the refractory metal delivery tube 6, pulling in preheated gas 10 (air, He, N₂, other or mixtures thereof) through the annulus 11 between the refractory metal delivery tube 6 and the gas amplifier 2 (see Figure 3).

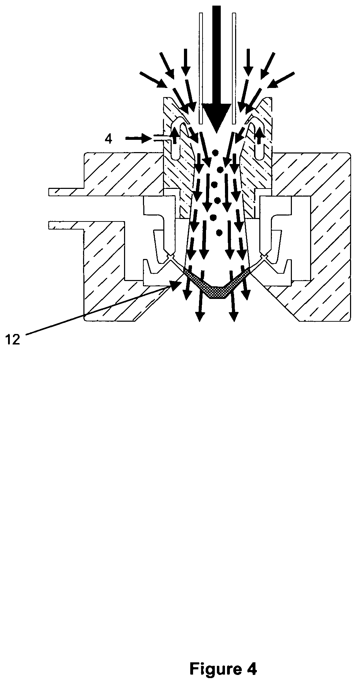

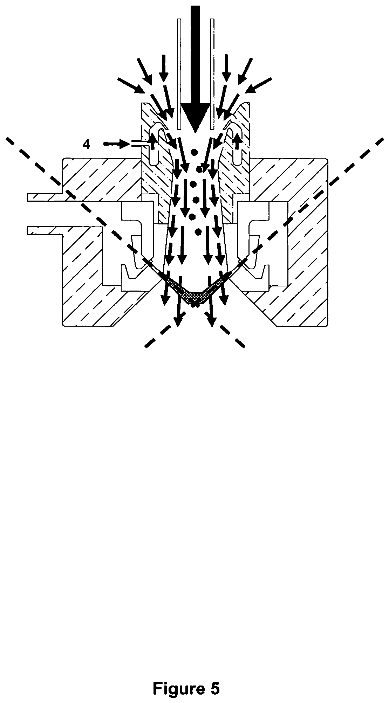

Molten material is then supplied through the refractory metal delivery tube 6. The rapidly moving gas stream severs droplets from the end of the tube 6; the mixture of particles, cold and hot gas passes through the supersonic nozzle 1. (see Figure 4). The gas stream cools the droplets and thereby heats up and expands. This results in the formation of a cone-shaped standing shockwave 12 at the nozzle outlet. The angle of the shockwave-cone is determined by the properties of the gas stream (temperature, pressure, flow rates) as well as the supersonic nozzle geometry. The geometry of the nozzle is selected such that in operation the angle of the shockwave-cone 12 is equal to the angle of the outlet of the shockwave generator 3 (see Figure 5).

Once the shockwave-cone 12 is stable, compressed air at a pressure of, for example, 5 to 200 bar is supplied through inlet 5 and enters a distribution manifold. From the manifold, the air enters through an annular gap into a modified Hartman-Sprenger chamber wherein a shockwave is generated. In a typical arrangement, pressure pulses at frequencies of 20kHz, 30kHz and 100kHz are generated in the shockwave-generator 3. These shock waves exit the chamber into the nozzle through an annular gap and are transferred through the shockwave-cone 12 into the particle stream. The shockwaves interact with the droplets in the gas stream breaking up larger particles. After exiting the nozzle , the particles are quickly quenched by the surrounding atmosphere.

The resultant particulate products form the process according to the invention can be used in a variety of applications that utilize glass or glass ceramic particles as precursor materials. For example, glass or glass ceramic particles can be used to produce catalyst supports, such as supports for high temperature catalysts, and filtration media, i.e., both liquid and gas filtration media.

In addition, the process according to the invention can be used as a starting material for making nano-porous microparticles, as described in copending and commonly-assigned US patent application No. 11/878,626, entitled "Nano-Porous Precursors for Opto-Ceramics via Novel Reactive Dissolution", filed July 25, 2007, the entire disclosure of which is hereby incorporated by reference. These nano-porous microparticles can be used to prepare catalyst supports, filtration media, and opto-ceramic elements, particularly opto-ceramic element for use in high energy laser applications.

The process and apparatus according to the invention can used for processing materials that melt at temperatures ranging from, for example, room temperature to in excess of 2500°C, where the upper temperature is only limited by the refractoriness of the containment (melting crucible).

Further, the process and apparatus according to the invention are particularly advantageous for processing materials that are highly unstable, such as compositions that rapidly crystallize and/or undergo phase separate upon cooling, owing to the rapid cooling rates of the inventive process.

The particulates formed by the process can be directly sprayed to form a coating, a three dimensional object (with or without the use of a mold), or can be collected as loose solid particles. The loose solid particulates can exhibit a number of physical characteristics depending on the operational parameters and/r composition of the melt. For example, the formed particles can be: spherical (normal shape, due to surface tension), hollow (due to gas evolution during cooling), flattened spheres (molten glass hitting a surface), fibers (using high speed laminar flow), or irregular smooth surfaced particulates (teardrops, donuts, etc).

The melt spraying process according to the invention has various advantages. The process can be used to prepare particulates with uniform chemistry and uniform thermal history. The particles are formed directly from the melt thereby reducing the amount post-particle formation processing. Further, the process parameters can be adjusted to control the particle size distribution range and can be used to provide particulate com positions with a narrow size distribution. The process is applicable to glasses with a wide range of melt temperatures and does not require the use of binders. The process permits the redox characteristics of glass to be controlled by the melt/spraying conditions. Further, the particulates can be produced in an inert environment, thus eliminating/reducing the chance for surface contamination, hydrolysis, adsorption, etc.

### EXAMPLES

### Example 1: Spraytest of laser glass LG-810

The laserglass LG-810 cullet was melted at a temperature of 1000°C in a gas-heated 100ml-crucible made out of high-temperature steel, and supplied to the spray-forming apparatus through a stainless-steel pipe with 5mm diameter. Compressed air provided by a diesel compressor (AirMan 185CFM) at a sustained pressure of 8bar and a peak flow rate of 180SCFM was supplied to inlet 4 and inlet 5. The composition of the Nd-doped fluorophosphate laser glass LG-810 developed for high-energy laser applications at 1060nm is as follows (see: Lee Cook and Karl-Heinz Mader, "Ultraviolet Transmission Characteristics of a Fluorophosphate Laser Glass", Journal of The American Ceramic Society, Vol .65, No. 5, Dec. 1982):

| Compound | Weight% |
|---|---|
| P₂O₅ | 9.69 |
| AlF₃ | 33.17 |
| NaF | 5.43 |
| KF | 3.62 |
| MgF₂ | 5.83 |
| CaF₂ | 30.45 |
| SrF₂ | 8.82 |
| LaF₃ | 2.00 |
| NdF₃ | 2.00 |

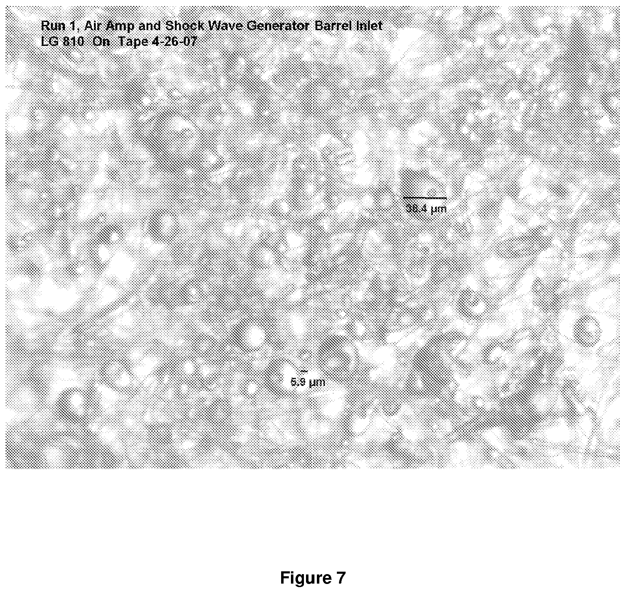

After establishing flow, the spray-forming of the molten material was completed in less than 5 seconds. The resultant product was a mixture of fibers and spherical particles (see Figure 7). Due to the limited amount of glass supplied no attempt was made to separate the fiber generated during startup from the particulate produced towards the end of the run. The particulate obtained was characterized using optical microscopy, and consisted of fibers with sub-micron diameter, and spherical particulate having an average diameter of about 10µm.

### Example 2: Spraytest of a borosilicate glass

The borosilicate glass was molten from cullet at a temperature of 1550°C in an inductively heated 100ml-crucible made out of a platinum-iridium alloy, and supplied to the spray-forming apparatus through a platinum-iridium alloy pipe with 5mm diameter. Compressed air provided by a diesel compressor (AirMan 185CFM) at a peak pressure of 8bar and a peak flow rate of 180SCFM was supplied to inlet 4 and inlet 5.

The composition of the borosilicate glass was as follows:

| Oxide | Weight % |
|---|---|
| Na₂O | 6.70 |
| B₂O₃ | 28.95 |
| SiO₂ | 64.35 |

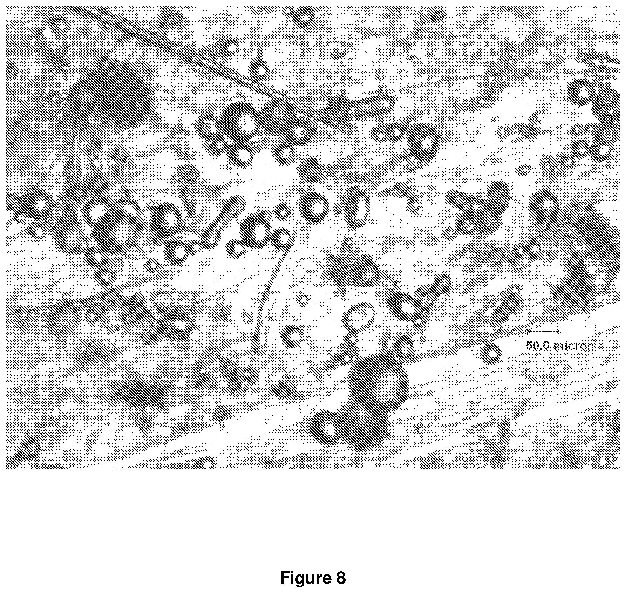

After establishing flow, the spray-forming of the molten material was completed in less than 5 seconds. The resultant product was a mixture of fibers and spherical particles (see Figure 8). Due to the limited amount of glass supplied no attempt was made to separate the fiber generated during startup from the particulate produced towards the end of the run. The particulate obtained was characterized using optical microscopy, and consisted of fibers with micron diameter, and two fractions of spherical particulate having an average diameter of about 10µm and of about 25µm.

The entire disclosures of all applications, patents and publications, cited herein are incorporated by reference herein.

The preceding examples can be repeated with similar success by substituting the generically or specifically described reactants and/or operating conditions of this invention for those used in the preceding examples.

Without further elaboration, it is believed that one skilled in the art can, using the preceding description, utilize the present invention to its fullest extent. The preceding preferred specific embodiments are, therefore, to be construed as merely illustrative, and not limitative of the remainder of the disclosure in any way whatsoever.

From the foregoing description, one skilled in the art can easily ascertain the essential characteristics of this invention and, without departing from the spirit and scope thereof, can make various changes and modifications of the invention to adapt it to various usages and conditions.

## Claims

1. A process for the production of particulate compositions, said process comprising:
providing a nozzle element (1) for producing a super-sonic shockwave (12), said nozzle element (1) having an inlet, a gas amplifier section (2) adjacent said inlet of the nozzle element (1), a shockwave generator section (3) downstream of said gas amplifier section (2), a delivery tube (6) for introducing molten material, and an outlet for discharging particles formed from said molten material,
said delivery tube (6) being positioned within said inlet of said nozzle element (1), a peripheral opening (7) being formed between said inlet of said nozzle element (1) and said delivery tube (6), said nozzle element (1) further comprising at least one first opening (4) in the gas amplifier section (2) for introducing a first relatively cold gas into said nozzle element (1), said first opening (4) being positioned below said peripheral opening (7), and said nozzle element (1) further comprising at least one second opening (5) in the shockwave generator section (3) for introducing a second relatively cold gas into said nozzle element (1) at a point adjacent said outlet of said nozzle element (1),
providing a relatively hot gas (10) at said peripheral opening (7) formed between said inlet of said nozzle element (1) and said delivery tube (6), and introducing a first relatively cold gas into said first opening (4) of said nozzle element (1) to create a low-pressure zone in said nozzle element (1) thereby pulling said relatively hot gas (10) into said nozzle element (1) through said peripheral opening (7),
introducing a stream of molten material through said delivery tube (6) whereby said relatively hot gas (10) flowing through said nozzle element (1) severs liquid material from the outlet of the delivery tube (6) thereby forming droplets of said molten material,
wherein the mixture of the first relatively cold gas and the relatively hot gas (10) cools the formed droplets of molten material thereby heating up and expanding and thus forming a standing cone-shaped shockwave (12) within said nozzle element (1) adjacent the outlet of said nozzle element (1).
introducing a second relatively cold gas into said second opening (5) of said nozzle element (1) thereby creating non-stationary shock waves at ultrasonic frequencies which are transferred through said standing cone-shaped shockwave (12) to the droplets of molten material thereby breaking up larger droplets, and
forming particles by quenching the resultant droplets discharged from the outlet of said nozzle element (1).

2. A process according to claim 1, wherein the said first relatively cold gas introduced into said first opening (4) of said nozzle element (1) is at a temperature of 0°C to 100°C and a pressure of 1-200 bar, said relatively hot gas (10) pulled into said nozzle element (1) through said peripheral opening (7) is at a temperature of 750°C to 2000°C and a pressure of less than 2 bar, and said second relatively cold gas introduced into said second opening (5) of said nozzle element (1) is at a temperature of 0°C to 100°C and a pressure of 1-200 bar.

3. A process according to claim 2, wherein said second relatively cold gas introduced into said second opening (5) of said nozzle element (1) is at a pressure of 5-200 bar.

4. A process according to claim 2 or 3, wherein said relatively hot gas (10) pulled into said nozzle element (1) through said peripheral opening (7) is at a pressure of 1-2 bar.

5. A process according to any one of claims 1 to 4, wherein said first relatively cold gas introduced into said first opening (4) of said nozzle element (1) is air, said relatively hot gas (10) pulled into said nozzle element (1) through said peripheral opening (7) is air, CO, CO₂, Ar, He, N₂, or any mixture thereof, and said second relatively cold gas introduced into said second opening (5) of said nozzle element (1) is air.

6. A process according to any one of claims 1 to 5, wherein said molten material is a molten glass composition.

7. A process according to any one of claims 1 to 6, wherein said peripheral opening (7) is an annular opening.

8. A process according to any one of claims 1 to 7, wherein said shockwave generator (3) is made from an adjustable set of rings (8) which permit the size and/or shape of the second opening (5) to be adjusted.

9. A process according to any one of claims 1 to 8, wherein the angle of the shockwave-cone is equal to the angle of the outlet of the shockwave generator (3).

10. A process according to any one of claims 1 to 9, wherein shockwaves (12) of 20kHz, 30kHz and 100kHz are generated in the shockwave generator (3).

11. A process according to any one of claims 1 to 10, wherein said molten material is a glass composition which is unstable and will normally undergo rapid crystallize and/or phase separate upon cooling.

12. An apparatus for the production of particulate compositions, said apparatus comprising:
a nozzle element (1) for producing a super-sonic shockwave (12), said nozzle element (1) having an inlet, a gas amplifier section (2) adjacent said inlet of the nozzle element (1), a shockwave generator section (3), a delivery tube (6) for introducing molten material, and an outlet for discharging particles formed from molten material,
said delivery tube (6) being positioned within said inlet of said nozzle element (1), a peripheral opening (7) being formed between said inlet of said super-sonic nozzle element (1) and said delivery tube (6), said nozzle element (1) further comprising at least one first opening (4) in the gas amplifier section (2) for introducing a first cold gas into said nozzle element (1), said first opening (4) being positioned below said peripheral opening (7), and said nozzle element (1) further comprising at least one second opening (5) in the shockwave generator section (3) for introducing a second cold gas into said nozzle element (1) at a point adjacent said outlet of said nozzle, and
said nozzle element (1) having a geometry whereby introduction of a gas into said second opening (5) of said nozzle element (1) will create shock waves.

13. An apparatus according to claim 12, wherein said peripheral opening (7) is an annular opening.

14. An apparatus according to any one of claims 12 to13, wherein said shockwave generator (3) is made from an adjustable set of rings (8) which permit the size and/or shape of the second opening (5) to be adjusted.

15. An apparatus according to any one of claims 12 to 14, wherein the angle of the shockwave-cone is equal to the angle of the outlet of the shockwave generator (3).

## Patentansprüche

1. Verfahren zur Herstellung von teilchenförmigen Zusammensetzungen, wobei das Verfahren umfasst:
Bereitstellen eines Düsenelements (1) zum Produzieren einer Ultraschall-Stoßwelle (12), wobei das Düsenelement (1) einen Einlass, einen Gasausdehnungsabschnitt (2) benachbart zu dem Einlass des Düsenelements (1), einen dem Gasausdehnungsabschnitt (2) nachgeschalteten Stoßwellengeneratorabschnitt (3), ein Zuführrohr (6) zum Einleiten von geschmolzenem Material und einen Auslass zum Ausstoßen von aus dem geschmolzenen Material gebildeten Partikeln aufweist,
wobei das Zuführrohr (6) innerhalb des Einlasses des Düsenelements (1) angeordnet ist, wobei eine Umfangsöffnung (7) zwischen dem Einlass des Düsenelements (1) und dem Zuführrohr (6) gebildet ist, wobei das Düsenelement (1) ferner mindestens eine erste Öffnung (4) in dem Gasausdehnungsabschnitt (2) zum Einleiten eines ersten relativ kalten Gases in das Düsenelement (1) umfasst, wobei die erste Öffnung (4) unter der Umfangsöffnung (7) angeordnet ist, und das Düsenelement (1) ferner mindestens eine zweite Öffnung (5) in dem Stoßwellengeneratorabschnitt (3) zum Einleiten eines zweiten relativ kalten Gases in das Düsenelement (1) hinein an einem zu dem Düsenelement (1) benachbarten Punkt umfasst,
Bereitstellen eines relativ heißen Gases (10) an der Umfangsöffnung (7), die zwischen dem Einlass des Düsenelements (1) und dem Zuführrohr (6) gebildet ist, und Einleiten eines ersten relativ kalten Gases in die erste Öffnung (4) des Düsenelements (1) hinein, um eine Niederdruckzone in dem Düsenelement (1) zu erzeugen, wodurch das relativ heiße Gas (10) durch die Umfangsöffnung (7) hindurch in das Düsenelement (1) hinein gezogen wird,
Einleiten eines Stroms von geschmolzenem Material durch das Zuführrohr (6) hindurch, wobei das durch das Düsenelement (1) hindurch strömende relativ heiße Gas (10) flüssiges Material von dem Auslass des Zuführrohrs (6) trennt, wodurch Tröpfchen aus dem geschmolzenen Material gebildet werden,
wobei die Mischung aus dem ersten relativ kalten Gas und dem relativ heißen Gas (10) die gebildeten Tröpfchen aus geschmolzenem Material abkühlt und sich dadurch erwärmt und ausdehnt und daher eine stehende kegelförmige Stoßwelle (12) innerhalb des Düsenelements (1) benachbart zu dem Auslass des Düsenelements (1) bildet,
Einleiten eines zweiten relativ kalten Gases in die zweite Öffnung (5) des Düsenelements (1) hinein, wodurch nicht stationäre Stoßwellen bei Ultraschallfrequenzen erzeugt werden, die durch die stehende kegelförmige Stoßwelle (12) zu den Tröpfchen von geschmolzenem Material übertragen werden, wodurch größere Tröpfchen zerteilt werden, und
Bilden von Partikeln durch Abschrecken der resultierenden Tröpfchen, die aus dem Auslass des Düsenelements (1) ausgestoßen werden.

2. Verfahren nach Anspruch 1, wobei das erste relativ kalte Gas, das in die erste Öffnung (4) des Düsenelements (1) hinein eingeleitet wird, sich bei einer Temperatur von 0 °C bis 100 °C und einem Druck von 1-200 bar befindet, das relativ heiße Gas (10), das durch die Umfangsöffnung (7) hindurch in das Düsenelement (1) hinein gezogen wird, sich bei einer Temperatur von 750 °C bis 2000 °C und einem Druck von weniger als 2 bar befindet, und das zweite relativ kalte Gas, das in die zweite Öffnung (5) des Düsenelements (1) hinein eingeleitet wird, sich bei einer Temperatur von 0 °C bis 100 °C und einem Druck von 1-200 bar befindet.

3. Verfahren nach Anspruch 2, wobei das zweite relativ kalte Gas, das in die zweite Öffnung (5) des Düsenelements (1) hinein eingeleitet wird, sich bei einem Druck von 5-200 bar befindet.

4. Verfahren nach Anspruch 2 oder 3, wobei das relativ heiße Gas (10), das durch die Umfangsöffnung (7) hindurch in das Düsenelement (1) hinein gezogen wird, sich bei einem Druck von 1-2 bar befindet.

5. Verfahren nach einem der Ansprüche 1 bis 4, wobei das erste relativ kalte Gas, das in die erste Öffnung (4) des Düsenelements (1) hinein eingeleitet wird, Luft ist, das relativ heiße Gas (10), das durch die Umfangsöffnung (7) hindurch in das Düsenelement (1) hinein gezogen wird, CO, CO₂, Ar, He, N₂ oder eine beliebige Mischung davon ist, und das zweite relativ kalte Gas, das in die zweite Öffnung (5) des Düsenelements (1) hinein eingeleitet wird, Luft ist.

6. Verfahren nach einem der Ansprüche 1 bis 5, wobei das geschmolzene Material eine geschmolzene Glaszusammensetzung ist.

7. Verfahren nach einem der Ansprüche 1 bis 6, wobei die Umfangsöffnung (7) eine ringförmige Öffnung ist.

8. Verfahren nach einem der Ansprüche 1 bis 7, wobei der Stoßwellengenerator (3) aus einem einstellbaren Satz von Ringen (8) hergestellt ist, die die Einstellung der Größe und/oder Form der zweiten Öffnung (5) zulassen.

9. Verfahren nach einem der Ansprüche 1 bis 8, wobei der Winkel des Stoßwellenkegels gleich dem Winkel des Auslasses des Stoßwellengenerators (3) ist.

10. Verfahren nach einem der Ansprüche 1 bis 9, wobei Stoßwellen (12) von 20 kHz, 30 kHz und 100 kHz in dem Stoßwellengenerator (3) erzeugt werden.

11. Verfahren nach einem der Ansprüche 1 bis 10, wobei das geschmolzene Material eine Glaszusammensetzung ist, die instabil ist und beim Abkühlen normalerweise eine rasche Kristallisation und/oder Phasentrennung durchmacht.

12. Vorrichtung zur Herstellung von teilchenförmigen Zusammensetzungen, wobei die Vorrichtung umfasst:
ein Düsenelement (1) zum Produzieren einer Ultraschall-Stoßwelle (12), wobei das Düsenelement (1) einen Einlass, einen Gasausdehnungsabschnitt (2) benachbart zu dem Einlass des Düsenelements (1), einen Stoßwellengeneratorabschnitt (3), ein Zuführrohr (6) zum Einleiten von geschmolzenem Material und einen Auslass zum Ausstoßen von aus dem geschmolzenen Material gebildeten Partikeln aufweist,
wobei das Zuführrohr (6) innerhalb des Einlasses des Düsenelements (1) angeordnet ist, wobei eine Umfangsöffnung (7) zwischen dem Einlass des Ultraschall-Düsenelements (1) und dem Zuführrohr (6) gebildet ist, wobei das Düsenelement (1) ferner mindestens eine erste Öffnung (4) in dem Gasausdehnungsabschnitt (2) zum Einleiten eines ersten kalten Gases in das Düsenelement (1) hinein umfasst, wobei die erste Öffnung (4) unter der Umfangsöffnung (7) angeordnet ist, wobei das Düsenelement (1) ferner mindestens eine zweite Öffnung (5) in
dem Stoßwellengeneratorabschnitt (3) zum Einleiten eines zweiten kalten Gases in das Düsenelement (1) hinein an einem zu dem Düsenelement (1) benachbarten Punkt umfasst, und
wobei das Düsenelement (1) eine Geometrie aufweist, durch die das Einleiten eines Gases in die zweite Öffnung (5) des Düsenelements (1) hinein Stoßwellen erzeugen wird.

13. Vorrichtung nach Anspruch 12, wobei die Umfangsöffnung (7) eine ringförmige Öffnung ist.

14. Vorrichtung nach einem der Ansprüche 12 bis 13, wobei der Stoßwellengenerator (3) aus einem einstellbaren Satz von Ringen (8) hergestellt ist, die die Einstellung der Größe und/oder Form der zweiten Öffnung (5) zulassen.

15. Vorrichtung nach einem der Ansprüche 12 bis 14, wobei der Winkel des Stoßwellenkegels gleich dem Winkel des Auslasses des Stoßwellengenerators (3) ist.

## Revendications

1. Procédé pour la production de compositions particulaires, ledit procédé comprenant :
la fourniture d'un élément de buse (1) pour produire une onde de choc supersonique (12), ledit élément de buse (1) comportant une admission, une section d'amplification gazeuse (2) adjacente à ladite admission de l'élément de buse (1), une section génératrice d'ondes de choc (3) en aval de ladite section d'amplification gazeuse (2), un tube de distribution (6) pour introduire la matière fondue, et une sortie pour évacuer les particules formées à partir de ladite matière fondue,
ledit tube de distribution (6) étant positionné à l'intérieur de ladite admission dudit élément de buse (1), une ouverture périphérique (7) étant formée entre ladite admission dudit élément de buse (1) et ledit tube de distribution (6), ledit élément de buse (1) comprenant en outre au moins une première ouverture (4) dans la section d'amplification gazeuse (2) pour introduire un premier gaz relativement froid dans ledit élément de buse (1), ladite première ouverture (4) étant positionnée au-dessous de ladite ouverture périphérique (7), et ledit élément de buse (1) comprenant en outre au moins une seconde ouverture (5) dans la section génératrice d'ondes de choc (3) pour introduire un second gaz relativement froid dans ledit élément de buse (1) au niveau d'un point adjacent à ladite sortie dudit élément de buse (1),
la fourniture d'un gaz relativement chaud (10) au niveau de ladite ouverture périphérique (7) formée entre ladite admission dudit élément de buse (1) et ledit tube de distribution (6), et l'introduction d'un premier gaz relativement froid dans ladite première ouverture (4) dudit élément de buse (1) pour créer une zone de basse pression dans ledit élément de buse (1), ce qui permet d'aspirer ledit gaz relativement chaud (10) vers ledit élément de buse (1) à travers ladite ouverture périphérique (7), l'introduction d'un flux de matière fondue à travers ledit tube de distribution (6) moyennant quoi ledit gaz relativement chaud (10) circulant à travers ledit élément de buse (1) sépare la matière liquide provenant de la sortie du tube de distribution (6), ce qui permet de former des gouttelettes de ladite matière fondue,
dans lequel le mélange du premier gaz relativement froid et du gaz relativement chaud (10) refroidit les gouttelettes formées de matière fondue, ce qui permet de chauffer et de dilater et ainsi de former une onde de choc conique verticale (12) au sein dudit élément de buse (1) adjacent à la sortie dudit élément de buse (1),
l'introduction d'un second gaz relativement froid dans ladite seconde ouverture (5) dudit élément de buse (1), ce qui permet de créer des ondes de choc non stationnaires à des fréquences ultrasonores qui sont transférées à travers ladite onde de choc conique verticale (12) vers les gouttelettes de matière fondue, ce qui permet de briser les gouttelettes les plus grandes, et
la formation de particules par le refroidissement rapide des gouttelettes résultantes évacuées par la sortie dudit élément de buse (1).

2. Procédé selon la revendication 1, dans lequel ledit premier gaz relativement froid introduit dans ladite première ouverture (4) dudit élément de buse (1) est à la température de 0 °C à 100 °C et une pression de 1 à 200 bars, ledit gaz relativement chaud (10) aspiré dans ledit élément de buse (1) à travers ladite ouverture périphérique (7) est à une température de 750 °C à 2 000 °C et une pression inférieure à 2 bars, et ledit second gaz relativement froid introduit dans ladite seconde ouverture (5) dudit élément de buse (1) est à une température de 0 °C à 100 °C et une pression de 1 à 200 bars.

3. Procédé selon la revendication 2, dans lequel ledit second gaz relativement froid introduit dans ladite seconde ouverture (5) dudit élément de buse (1) est à une pression de 5 à 200 bars.

4. Procédé selon la revendication 2 ou 3, dans lequel ledit gaz relativement chaud (10) aspiré dans ledit élément de buse (1) à travers ladite ouverture périphérique (7) est à une pression de 1 à 2 bars.

5. Procédé selon l'une quelconque des revendications 1 à 4, dans lequel ledit premier gaz relativement froid introduit dans ladite première ouverture (4) dudit élément de buse (1) est l'air, ledit gaz relativement chaud (10) aspiré dans ledit élément de buse (1) à travers ladite ouverture périphérique (7) est l'air, CO, CO₂, Ar, He, N₂, ou un mélange quelconque de ceux-ci, et ledit second gaz relativement froid introduit dans ladite seconde ouverture (5) dudit élément de buse (1) est l'air.

6. Procédé selon l'une quelconque des revendications 1 à 5, dans lequel ladite matière fondue est une composition de verre fondu.

7. Procédé selon l'une quelconque des revendications 1 à 6, dans lequel ladite ouverture périphérique (7) est une ouverture annulaire.

8. Procédé selon l'une quelconque des revendications 1 à 7, dans lequel ledit générateur d'ondes de choc (3) est composé d'un ensemble réglable d'anneaux (8) qui permettent que la taille et/ou la forme de la seconde ouverture (5) soient réglées.

9. Procédé selon l'une quelconque des revendications 1 à 8, dans lequel l'angle du cône d'onde de choc est égal à l'angle de la sortie du générateur d'ondes de choc (3).

10. Procédé selon l'une quelconque des revendications 1 à 9, dans lequel des ondes de choc (12) de 20 kHz, 30 kHz et 100 kHz sont générées dans le générateur d'ondes de choc (3).

11. Procédé selon l'une quelconque des revendications 1 à 10, dans lequel ladite matière fondue est une composition de verre qui est instable et qui doit normalement subir une cristallisation rapide et/ou une séparation de phase lors du refroidissement.

12. Appareil pour la production de compositions particulaires, ledit appareil comprenant :
un élément de buse (1) pour produire une onde de choc supersonique (12), ledit élément de buse (1) comportant une admission, une section d'amplification gazeuse (2) adjacente à ladite admission de l'élément de buse (1), une section génératrice d'ondes de choc (3), un tube de distribution (6) pour introduire la matière fondue, et une sortie pour évacuer les particules formées à partir de ladite matière fondue,
ledit tube de distribution (6) étant positionné à l'intérieur de ladite admission dudit élément de buse (1), une ouverture périphérique (7) étant formée entre ladite admission dudit élément de buse (1) supersonique et ledit tube de distribution (6), ledit élément de buse (1) comprenant en outre au moins une première ouverture (4) dans la section d'amplification gazeuse (2) pour introduire un premier gaz froid dans ledit élément de buse (1), ladite première ouverture (4) étant positionnée au-dessous de ladite ouverture périphérique (7), et ledit élément de buse (1) comprenant en outre au moins une seconde ouverture (5) dans la section génératrice d'ondes de choc (3) pour introduire un second gaz froid dans ledit élément de buse (1) au niveau d'un point adjacent à ladite sortie de ladite buse, et
ledit élément de buse (1) ayant une géométrie par laquelle l'introduction d'un gaz dans ladite seconde ouverture (5) dudit élément de buse (1) va créer des ondes de choc.

13. Appareil selon la revendication 12, dans lequel ladite ouverture périphérique (7) est une ouverture annulaire.

14. Appareil selon l'une quelconque des revendications 12 à 13, dans lequel ledit générateur d'ondes de choc (3) est composé d'un ensemble réglable d'anneaux (8) qui permettent que la taille et/ou la forme de la seconde ouverture (5) soient réglées.

15. Appareil selon l'une quelconque des revendications 12 à 14, dans lequel l'angle du cône d'onde de choc est égal à l'angle de la sortie du générateur d'ondes de choc (3).
